# EUROPEAN PATENT SPECIFICATION

(11) **EP 2 980 902 B1**
(45) Date of publication and mention of the grant of the patent: **02.05.2018**
(21) Application number: 14775508.6
(22) Date of filing: 07.03.2014
(51) Int. Cl.: H01M 8/04, H01M 8/06, H01M 8/10

(54) **HYDROGEN GENERATION APPARATUS, FUEL CELL SYSTEM INCLUDING THE SAME, METHOD OF OPERATING HYDROGEN GENERATION APPARATUS, AND METHOD OF OPERATING FUEL CELL SYSTEM**
WASSERSTOFFERZEUGUNGSVORRICHTUNG, BRENNSTOFFZELLENSYSTEM DAMIT, VERFAHREN FÜR DEN BETRIEB EINER WASSERSTOFFERZEUGUNGSVORRICHTUNG UND VERFAHREN FÜR DEN BETRIEB EINES BRENNSTOFFZELLENSYSTEMS
DISPOSITIF DE PRODUCTION D'HYDROGÈNE, SYSTÈME DE PILE À COMBUSTIBLE COMPRENANT DE CE DERNIER, PROCÉDÉ DE MISE EN OEUVRE DU DISPOSITIF DE PRODUCTION D'HYDROGÈNE, ET PROCÉDÉ DE MISE EN OEUVRE DU SYSTÈME DE PILE À COMBUSTIBLE

(30) Priority: 28.03.2013 JP 2013068103
(43) Date of publication of application: 03.02.2016
(73) Proprietor: Panasonic Intellectual Property Management Co., Ltd., Osaka-shi, Osaka 540-6207 (JP)
(72) Inventor: TATSUI, Hiroshi, Osaka-shi Osaka 540-6207 (JP); YUKIMASA, Akinori, Osaka-shi Osaka 540-6207 (JP); TAGUCHI, Kiyoshi, Osaka-shi Osaka 540-6207 (JP); IIYAMA, Shigeru, Osaka-shi Osaka 540-6207 (JP)
(74) Representative: Grünecker Patent- und Rechtsanwälte PartG mbB
(86) International application number: PCT/JP2014/001291
(87) International publication number: WO 2014/155996

(56) References cited:
- EP-A1- 1 850 415
- EP-A1- 2 808 298
- JP-A- H0 763 329
- JP-A- 2005 026 059
- JP-A- 2009 031 080
- JP-A- 2011 256 059
- US-A1- 2010 285 377

## Description

### Technical Field

The present invention relates to a hydrogen generation apparatus including a CO sensor for detecting carbon monoxide in a flue gas from a combustor, a fuel cell system including the hydrogen generation apparatus, a method of operating the hydrogen generation apparatus, and a method of operating the fuel cell system.

### Background Art

It is often the case that an infrastructure for supplying hydrogen as a fuel gas for fuel cell systems is not developed. Therefore, usually, fuel cell systems are each provided with a hydrogen generator for generating a hydrogen-rich fuel gas from a raw material gas that contains a hydrocarbon as a main component. The raw material gas is, for example, natural gas or LPG. Such a hydrogen generator is provided with a combustor. The combustor combusts a combustion gas to heat the hydrogen generator. Examples of the combustion gas include: an anode off gas containing hydrogen that has not been used in the fuel cell; the raw material gas; and the fuel gas. Among such fuel cell systems, there is a known fuel cell system that includes a CO sensor for detecting the concentration of carbon monoxide contained in a flue gas discharged from a combustor (see Patent Literature 1, for example).

Conventionally, it is known that such a CO sensor as the one included in the fuel cell system disclosed in Patent Literature 1 uses a calibration gas containing carbon monoxide to perform an operation check of checking whether or not the CO sensor is able to detect carbon monoxide (see Patent Literature 2, for example).

US 2010/0285377 A1 relates to a hydrogen generator and a fuel cell system including the hydrogen generator. JP H07 63329 A relates to an operation inspecting method of a CO sensor in a burner

### Citation List

### Patent Literature

PTL 1: (PCT) International Publication No. WO 2010/10699
PTL 2: Japanese Laid-Open Patent Application Publication No. 2004-93204

### Summary of Invention

### Technical Problem

However, in order to perform the operation check of a CO sensor included in a conventional fuel cell system by using a calibration gas, the fuel cell system needs to include calibration gas supply equipment. This results in an increase in the size and cost of the fuel cell system, which is unfavorable. In a case where the fuel cell system does not include calibration gas supply equipment, calibration gas supply equipment needs to be carried to the installation location of the fuel cell system at the time of performing the operation check of the CO sensor. In this case, there is a problem in that the calibration work becomes complex and cumbersome, and performing the operation check frequently becomes virtually impossible.

The present invention has been made to solve the above-described conventional problems. An object of the present invention is to provide a hydrogen generation apparatus capable of performing an operation check of a CO sensor more readily than conventional art, a fuel cell system including the hydrogen generation apparatus, a method of operating the hydrogen generation apparatus, and a method of operating the fuel cell system.

### Solution to Problem

In order to solve the above-described problems, a hydrogen generation apparatus according to the present invention is defined in claim 1. A method of operating a hydrogen generation apparatus is defined in claim 5. Further advantageous embodiments are defined in claims 2 - 4 and 6.

According to the above configuration, in an operation check of checking the operation of the CO sensor, carbon monoxide is contained in the flue gas. If the CO sensor is in a normal state, the CO sensor detects the carbon monoxide in the flue gas, but if the CO sensor is in an abnormal state, the CO sensor does not detect the carbon monoxide in the flue gas. This configuration makes it possible to perform the operation check of the CO sensor by checking whether the CO sensor is in a normal state or in an abnormal state.

### Advantageous Effects of Invention

The hydrogen generation apparatus, a fuel cell system including the same, a method of operating the hydrogen generation apparatus, and a method of operating the fuel cell system according to the present invention are capable of checking whether the CO sensor is in a normal state or in an abnormal state, thereby making it possible to readily perform the operation check of the CO sensor.

### Brief Description of Drawings

Fig. 1 is a block diagram showing schematic configurations of a hydrogen generation apparatus according to Embodiment 1 and a fuel cell system including the same.
Fig. 2 is a flowchart showing schematic operations of the fuel cell system according to Embodiment 1.
Fig. 3 is a flowchart showing schematic operations of a fuel cell system according to Variation 1 of Embodiment 1.
Fig. 4 is a flowchart showing schematic operations of a fuel cell system according to Embodiment 2.
Fig. 5 is a block diagram showing schematic configurations of a hydrogen generation apparatus according to Embodiment 3 and a fuel cell system including the same.
Fig. 6 is a flowchart showing schematic operations of the fuel cell system according to Embodiment 3.

### Description of Embodiments

The inventors of the present invention conducted diligent studies regarding a CO sensor to be included in a fuel cell system, aiming to make it possible to check whether the CO sensor is in a normal state or in an abnormal state with a relatively simple configuration and operation for the purpose of improving the safety of the fuel cell system. As a result of the studies, the inventors have obtained findings as described below.

Specifically, the inventors of the present invention have arrived at the following idea: whether the CO sensor is in a normal state or in an abnormal state can be checked more readily than conventional art by regularly generating and containing a predetermined concentration of carbon monoxide in the flue gas and comparing an output value of the CO sensor with an upper limit threshold and a lower limit threshold that are set in advance.

Further, as a result of diligent studies, the inventors of the present invention have obtained the following findings: at the time of causing carbon monoxide to be contained in the flue gas by changing an air-fuel ratio, which is the ratio between air and a combustion gas that are supplied to the combustor, carbon monoxide in a predetermined concentration range can be generated more readily if the combustion gas to be supplied to the combustor is not the fuel gas containing hydrogen as a main component or the anode off gas containing hydrogen that has not been utilized in the fuel cell, but the raw material gas.

A hydrogen generation apparatus according to the present invention includes: a hydrogen generator configured to generate a hydrogen-containing fuel gas from a raw material gas containing a hydrocarbon; a combustor configured to heat the hydrogen generator; a combustion gas supply device configured to supply a combustion gas to the combustor; an air supply device configured to supply air to the combustor; a CO sensor configured to detect carbon monoxide contained in a flue gas discharged from the combustor; and a controller. In a case where a temperature of the hydrogen generator is lower than or equal to a first temperature set in advance, or in a case where a first period set in advance has elapsed after combustion by the combustor has ended, the controller: causes the combustion gas supply device to supply the raw material gas as the combustion gas to the combustor; and controls an air-fuel ratio to be out of a predetermined range, the air-fuel ratio being a ratio between the air and the combustion gas that are supplied to the combustor. In a case where the CO sensor does not detect a predetermined carbon monoxide concentration, the controller: determines that the CO sensor is in an abnormal state; gives a notification that the CO sensor is in an abnormal state; or performs control to stop the hydrogen generation apparatus from operating.

A fuel cell system according to the present invention includes: the above hydrogen generation apparatus; and a fuel cell configured to generate electric power by causing a reaction between an oxidizing gas and a hydrogen-containing gas supplied from the hydrogen generation apparatus.

The "first temperature set in advance" herein is a temperature at which carbon deposition onto a catalyst in the hydrogen generator does not occur even when the raw material gas is supplied to the hydrogen generator.

According to the above configuration, in an operation check of checking the operation of the CO sensor, carbon monoxide is contained in the flue gas. If the CO sensor is in a normal state, the CO sensor detects the carbon monoxide in the flue gas, but if the CO sensor is in an abnormal state, the CO sensor does not detect the carbon monoxide in the flue gas. This configuration makes it possible to perform the operation check of the CO sensor by checking whether the CO sensor is in a normal state or in an abnormal state.

Further, by controlling the temperature of the hydrogen generator to be lower than or equal to the first temperature, carbon deposition onto the catalyst in the hydrogen generator is prevented even when the raw material gas is flowed to the hydrogen generator. In this manner, degradation in the performance of the hydrogen generator can be suppressed.

Hereinafter, preferred embodiments of the present invention are described with reference to the drawings. In the drawings, the same or corresponding components are denoted by the same reference signs, and repeating the same descriptions is avoided. In the drawings, only the components necessary for describing the present invention are shown, and the other components are omitted. Further, the present invention is not limited to the embodiments described below.

### (Embodiment 1)

A hydrogen generation apparatus according to Embodiment 1 includes: a hydrogen generator configured to generate a hydrogen-containing fuel gas from a raw material gas containing a hydrocarbon; a combustor configured to heat the hydrogen generator; a combustion gas supply device configured to supply a combustion gas to the combustor; an air supply device configured to supply air to the combustor; a CO sensor configured to detect carbon monoxide contained in a flue gas discharged from the combustor; and a controller. In a case where a temperature of the hydrogen generator is lower than or equal to a first temperature set in advance, the controller: causes the combustion gas supply device to supply the raw material gas as the combustion gas to the combustor; and controls an air-fuel ratio to be out of a predetermined range, the air-fuel ratio being a ratio between the air and the combustion gas that are supplied to the combustor. In a case where the CO sensor does not detect a predetermined carbon monoxide concentration, the controller: determines that the CO sensor is in an abnormal state; gives a notification that the CO sensor is in an abnormal state; or performs control to stop the hydrogen generation apparatus from operating.

In the hydrogen generation apparatus 101 according to Embodiment 1, the controller may refrain from starting up the hydrogen generation apparatus if a start-up signal to start up the hydrogen generation apparatus has been inputted in a case where the temperature of the hydrogen generator is higher than the first temperature.

A fuel cell system 100 according to Embodiment 1 includes: the above hydrogen generation apparatus; and a fuel cell configured to generate electric power by causing a reaction between an oxidizing gas and a hydrogen-containing gas supplied from the hydrogen generation apparatus.

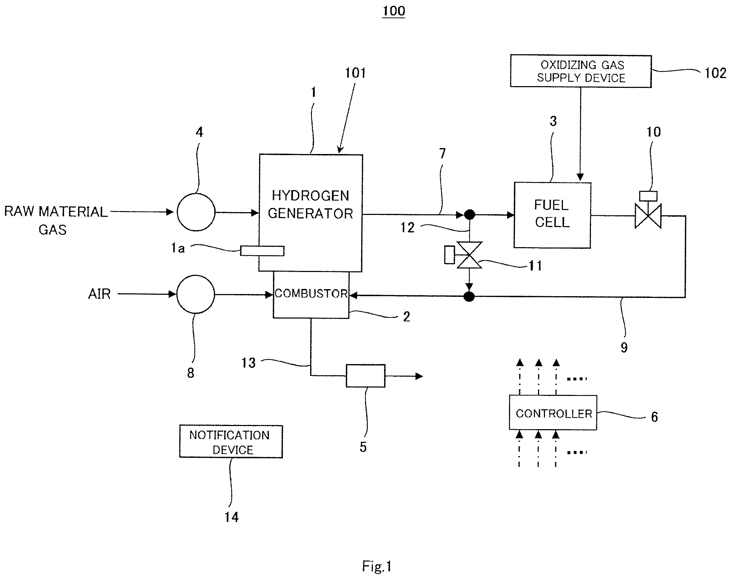

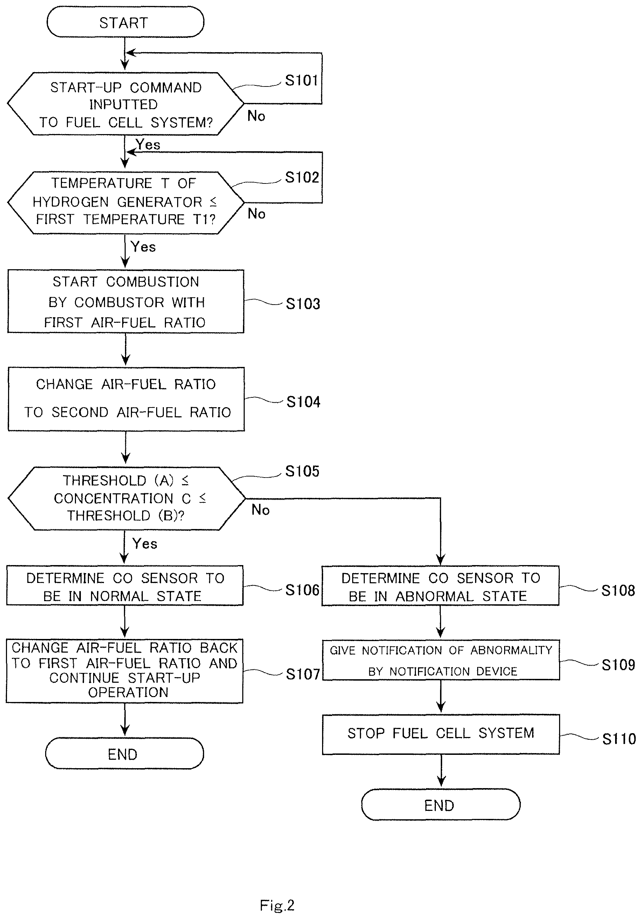

Hereinafter, one example of the hydrogen generation apparatus according to Embodiment 1 and the fuel cell system including the same is described with reference to Fig. 1 and Fig. 2.

### [Configurations of Hydrogen Generation Apparatus and Fuel Cell System]

Fig. 1 is a block diagram showing schematic configurations of the hydrogen generation apparatus according to Embodiment 1 and the fuel cell system including the same.

As shown in Fig. 1, the fuel cell system 100 according to Embodiment 1 includes the hydrogen generation apparatus 101, an oxidizing gas supply device 102, and a fuel cell 3. The hydrogen generation apparatus 101 includes a hydrogen generator 1, a combustor 2, a raw material gas supply device 4, a CO sensor 5, a controller 6, and a notification device 14.

The hydrogen generator 1 includes a reformer (not shown). The reformer includes a catalyst therein, and generates a fuel gas from a raw material gas through a reforming reaction. The fuel gas is a hydrogen-containing gas. The reforming reaction may be any type of reforming reaction. Examples of the reforming reaction include a steam reforming reaction, an autothermal reaction, and a partial oxidation reaction. The hydrogen generator 1 includes, as necessary, devices required for the reforming reaction although they are not shown in Fig. 1. The reformer used in the fuel cell system 100 according to Embodiment 1 utilizes a steam reforming reaction. Therefore, the hydrogen generator 1 includes a steam supply device for supplying steam to the reformer although the steam supply device is not shown. In a case where the reforming reaction is an autothermal reaction, the hydrogen generator 1 includes an air supply device (not shown) for supplying air to the reformer.

The hydrogen generator 1 is supplied with the raw material gas, which is supplied from the outside of the fuel cell system 100 via the raw material gas supply device 4. It should be noted that the raw material gas is a gas that contains an organic compound comprised of at least carbon and hydrogen, such as city gas or natural gas both containing methane as a main component, or LPG.

The hydrogen generator 1 further includes a temperature detector 1a configured to detect the temperature of the catalyst in the hydrogen generator 1. The temperature detector 1a outputs the detected catalyst temperature as an electrical signal to the controller 6 described below. The temperature detector 1a may be configured to directly detect the temperature of the catalyst. Alternatively, the temperature detector 1a may be configured to detect the temperature of gas that passes the catalyst or the temperature of a structural body that forms the hydrogen generator 1, and estimate the temperature of the catalyst based on the detected temperature.

The raw material gas supply device 4 is configured to adjust the flow rate of the raw material gas supplied to the hydrogen generator 1. The raw material gas supply device 4 is constituted by, for example, a booster such as a booster pump and a flow rate adjusting valve. Alternatively, the raw material gas supply device 4 may be constituted by either one of these. For example, a fixed displacement booster pump is used as the booster. However, the booster is not limited to a fixed displacement booster pump.

A fuel gas passage 7, which will be described below, is connected to a fuel gas outlet of the hydrogen generator 1. The fuel gas generated by the hydrogen generator 1 passes through the fuel gas passage 7, and is supplied to the fuel cell 3.

The fuel cell 3 generates electric power by using the fuel gas generated by the hydrogen generator 1 and oxygen in air. The air is an oxidizing gas supplied from the oxidizing gas supply device 102. The fuel cell 3 may be any type of fuel cell. In the fuel cell system 100 according to Embodiment 1, a polymer electrolyte fuel cell (PEFC) is used. As an alternative, for example, a solid oxide fuel cell or a phosphoric acid fuel cell may be used as the fuel cell 3. It should be noted that, for example, a fan device such as a blower or sirocco fan, a diaphragm air pump, etc., can be used as the oxidizing gas supply device 102.

The hydrogen-containing fuel gas that has not been utilized in the power generation by the fuel cell 3 (hereinafter, referred to as an off fuel gas as necessary) is discharged from the fuel cell 3 through an off fuel gas passage 9. Specifically, the off fuel gas discharged from the fuel cell 3 is supplied to the combustor 2, which will be described below, of the hydrogen generator 1 through the off fuel gas passage 9.

The off fuel gas passage 9 includes a first on-off valve 10. The first on-off valve 10 may be a valve driven by electric power such as a solenoid valve, or may be a valve driven by gas pressure. The first on-off valve 10 may be configured in any form, so long as the first on-off valve 10 is configured to open and close the off fuel gas passage 9.

The fuel gas passage 7 is a passage through which the fuel gas generated by the hydrogen generator 1 is supplied to the fuel cell 3. Specifically, one end of the fuel gas passage 7 is connected to the fuel gas outlet of the hydrogen generator 1, and the other end of the fuel gas passage 7 is connected to the anode of the fuel cell 3. A bypass passage 12 branches off from the fuel gas passage 7.

The bypass passage 12 is a passage through which the fuel gas generated by the hydrogen generator 1 is supplied to the combustor 2 in a manner to bypass the fuel cell 3. Specifically, the bypass passage 12, which branches off from the fuel gas passage 7, is connected to the off fuel gas passage 9 at a position downstream of the first on-off valve 10. In addition, the bypass passage 12 includes a second on-off valve 11. The second on-off valve 11 may be a valve driven by electric power such as a solenoid valve, or may be a valve driven by gas pressure. The second on-off valve 11 may be configured in any form, so long as the second on-off valve 11 is configured to open and close the bypass passage 12.

The first on-off valve 10 and the second on-off valve 11 are controlled by the controller 6 described below, and thereby the fuel gas passage 7 can be switched between two passages as intended. One of the two passages is formed when the first on-off valve 10 is opened and the second on-off valve 11 is closed, and the one passage realizes a flow that passes through the fuel cell 3 and then flows from the off fuel gas passage 9 to the combustor 2. The other passage is formed when the first on-off valve 10 is closed and the second on-off valve 11 is opened, and the other passage realizes a flow that passes through the bypass passage 12 and then flows from the off fuel gas passage 9 to the combustor 2.

In the fuel cell system 100 according to Embodiment 1, the first on-off valve 10 is installed on the off fuel gas passage 9 at a position that is nearer to the fuel cell 3 than a merging point where the off fuel gas passage 9 and the bypass passage 12 merge together. However, the position of the first on-off valve 10 is not thus limited. As an alternative, the first on-off valve 10 may be installed on the fuel gas passage 7 at a position that is nearer to the fuel cell 3 than a branch point where the bypass passage 12 branches off from the fuel gas passage 7. As another alternative, the first on-off valve 10 may be provided at both a position upstream of the fuel cell 3 and a position downstream of the fuel cell 3. As yet another alternative, the first on-off valve 10 and the second on-off valve 11 may be replaced by a passage change-over valve such as a three-way valve.

The combustor 2 uses the raw material gas and at least one of the fuel gas and the off fuel gas as combustion gases, and combusts the combustion gases with combustion air supplied to the combustor 2 from a combustion air supply device 8, thereby heating the hydrogen generator 1 to maintain the temperature of the catalyst in the hydrogen generator 1 at a suitable temperature for its catalytic reaction. A flue gas generated as a result of the combustion is discharged to the outside through a flue gas passage 13, which will be described below.

In Embodiment 1, the raw material gas supply device 4 may be used as a combustion gas supply device for supplying a combustion gas to the combustor 2. In this case, the raw material gas that has passed through the hydrogen generator 1 or the raw material gas that has bypassed the hydrogen generator 1 may be supplied to the combustor 2 at start-up of the fuel cell system 100 (the hydrogen generation apparatus 101).

The combustion air supply device 8 is configured to adjust the flow rate of the combustion air supplied to the combustor 2. For example, the combustion air supply device 8 is constituted by a blower fan and a flowmeter. However, the configuration of the combustion air supply device 8 is not thus limited. As an alternative, a fixed displacement blower may be used as the combustion air supply device 8

The flue gas passage 13 is a passage through which the flue gas generated as a result of the combustion by the combustor 2 is discharged to the outside. The CO sensor 5 is installed on the flue gas passage 13. The CO sensor 5 may be disposed on the flue gas passage 13 as shown in Fig. 1, or may be disposed on piping that branches off from the flue gas passage 13.

The CO sensor 5 is configured to detect the concentration of carbon monoxide in the flue gas discharged from the combustor 2. For example, a catalytic combustion type CO sensor or a semiconductor type CO sensor may be adopted as the CO sensor 5. The catalytic combustion type CO sensor 5 includes two heater coils therein. The heater coils are provided with a detection element and a compensation element, respectively. A catalyst is added to the detection element, and no catalyst is added to the compensation element. The heater coils serve to heat the detection element and the compensation element to a suitable temperature for the detection element to cause a catalytic reaction of carbon monoxide.

When gas containing carbon monoxide comes into contact with the detection element of the CO sensor 5, catalytic combustion occurs and combustion heat is generated. On the other hand, when the gas containing carbon monoxide comes into contact with the compensation element, combustion does not occur since no catalyst is added to the compensation element. As a result, a temperature difference occurs between the detection element and the compensation element. The CO sensor 5 outputs the temperature difference (a resistance value difference) between the two elements, i.e., the detection element and the compensation element, as an electrical signal to the controller 6 described below. Since the temperature of the detection element increases in accordance with the concentration of carbon monoxide, there is a proportional relationship such that the higher the carbon monoxide concentration, the higher the output value.

The controller 6 may be any controller, so long as the controller 6 has functions of: receiving an output signal from the CO sensor 5; and suitably controlling component devices of the fuel cell system 100, such as the raw material gas supply device 4, the first on-off valve 10, and the second on-off valve 11. The controller 6 includes an arithmetic processing unit (not shown), a storage unit (not shown) storing control programs, and a timer unit. Examples of the arithmetic processing unit include an MPU and a CPU. The storage unit is a memory, for example. The controller may be configured as a single controller performing centralized control, or may be configured as a group of multiple controllers performing distributed control in cooperation with each other.

The controller 6 receives an output signal from the CO sensor 5, and determines whether or not the CO sensor 5 is in an abnormal state. If it is determined that the CO sensor 5 is in an abnormal state, the controller 6 notifies the notification device 14 of the abnormality.

The notification device 14 may be configured in any form, so long as the notification device 14 is configured to give a notification to the outside that the CO sensor 5 is in an abnormal state. Examples of the manner of giving a notification to the outside include: displaying character data, image data, or the like on a display unit (screen) of a remote controller; giving an audio notification by means of a speaker or the like; giving a notification by emitting light or showing a color; and sending an email notification or an application notification to a smartphone, mobile phone, tablet computer, or the like through a communication network.

### [Operations of Hydrogen Generation Apparatus and Fuel Cell System]

Next, operations of the fuel cell system 100 (the hydrogen generation apparatus 101) according to Embodiment 1 are described. It should be noted that the operations described below are performed based on control programs stored in the storage unit of the controller 6.

First, a power generation operation of the fuel cell system 100 is described.

When the fuel cell system 100 performs the power generation operation, the controller 6 opens the first on-off valve 10 and drives the raw material gas supply device 4 with the second on-off valve 11 closed. As a result, the raw material gas at a predetermined flow rate and steam are supplied to the hydrogen generator 1, and a fuel gas is generated from the raw material gas.

The fuel gas generated by the hydrogen generator 1 is supplied to the fuel cell 3 through the fuel gas passage 7. In addition, the oxidizing gas supply device 102 supplies air to the fuel cell 3 as an oxidizing gas. As a result, the fuel cell 3 generates electric power.

The hydrogen-containing off fuel gas that has not been consumed in the power generation by the fuel cell 3 is supplied to the combustor 2 through the off fuel gas passage 9 as a combustion gas. In addition, the combustor 2 is supplied with combustion air from the combustion air supply device 8, and the combustor 2 combusts the off fuel gas. At the time, heat generated from the combustor 2 is utilized to maintain the temperature of the catalyst in the hydrogen generator 1 to a suitable temperature for generating the fuel gas from the raw material gas.

The flow rate of the raw material gas supplied by the raw material gas supply device is adjusted by the controller 6, such that the raw material gas is supplied to the hydrogen generator 1 at a flow rate necessary for the power generation by the fuel cell 3 and the combustion by the combustor 2, the combustion being necessary for maintaining the temperature of the catalyst in the hydrogen generator 1.

The flow rate of the air supplied to the combustor 2 by the combustion air supply device 8 is controlled by the controller 6 to a flow rate that is necessary for causing stable perfect combustion of the off fuel gas supplied to the combustor 2. In this manner, the combustor 2 is normally supplied with the combustion air and the off fuel gas serving as a combustion gas at an air-fuel ratio in a predetermined range, and thereby stable perfect combustion is realized.

The flue gas generated as a result of the combustion by the combustor 2 is discharged to the outside of the fuel cell system 100 through the flue gas passage 13.

Next, a start-up operation of the fuel cell system 100 is described.

When the fuel cell system 100 performs the start-up operation, the controller 6 closes the first on-off valve 10 and operates the raw material gas supply device 4 with the second on-off valve 11 opened, thereby starting supplying the raw material gas. The raw material gas passes through the interior of the hydrogen generator 1, and flows through the fuel gas passage 7, the bypass passage 12, and the off fuel gas passage 9 to be supplied to the combustor 2 as a combustion gas.

By using the combustion air supplied from the combustion air supply device 8, the combustor 2 combusts the raw material gas that has been supplied thereto through the hydrogen generator 1, thereby heating the hydrogen generator 1 with the combustion heat.

When the temperature of the catalyst in the hydrogen generator 1 has increased to a first temperature owing to the combustion by the combustor 2, the steam supply device, which is not shown, supplies steam to the hydrogen generator 1. As a result, a reforming reaction starts. The first temperature herein is lower than temperatures at which carbon deposition onto the catalyst occurs when the raw material gas alone is fed to the catalyst in the hydrogen generator 1. The first temperature may be stored in the controller 6 in advance.

When the reforming reaction has started, the fuel gas generated by the hydrogen generator 1 is supplied to the combustor 2 as a combustion gas, and the combustion gas is combusted by using the combustion air supplied from the combustion air supply device 8.

After the start of the reforming reaction, until the temperature of the catalyst in the hydrogen generator 1 increases to a temperature that is high enough to generate the fuel gas at a predetermined conversion rate (i.e., a rate at which the hydrocarbon in the raw material gas is reformed to hydrogen) or higher, a sufficient amount of hydrogen necessary for the power generation by the fuel cell 3 is not generated in the hydrogen generator 1, and also, the fuel gas supplied from the hydrogen generator 1 contains components that poison a catalyst in the fuel cell 3, such as carbon monoxide. For these reasons, at the start-up operation of the fuel cell system 100, the first on-off valve 10 and the second on-off valve 11 are operated such that the fuel gas that is not suitable to be supplied to the fuel cell 3 is supplied to the combustor 2 through the bypass passage 12 without flowing through the fuel cell 3.

When hydrogen in a sufficient amount for the power generation starts to be generated in the hydrogen generator 1, the first on-off valve 10 is opened and the second on-off valve 11 is closed to switch the passage such that the fuel gas is supplied to the fuel cell 3, and the power generation operation is started.

Also at the start-up operation, the controller 6 controls the raw material gas supply device 4 and the combustion air supply device 8 to adjust the flow rates of the combustion gas and the combustion air that are supplied to the combustor 2, thereby adjusting the air-fuel ratio to be in a predetermined range so that the combustor 2 will perform stable perfect combustion at a normal time. The "normal time" herein refers to a period in which an operation check of the CO sensor, which will be described below, is not performed for the combustor 2. During the period, the fuel gas and air are combusted.

The flue gas generated as a result of the raw material gas being combusted by the combustor 2 is discharged to the outside of the fuel cell system 100 through the flue gas passage 13.

Assume that, in the fuel cell system 100 according to Embodiment 1, during normal combustion at the power generation operation or the start-up operation, imperfect combustion has occurred in the combustor 2 due to, for example, an unintended change in the flow rate of the combustion air, causing carbon monoxide to be contained in the flue gas. In this case, when the CO sensor 5 provided on the flue gas passage 13 detects the carbon monoxide, if the concentration of the detected carbon monoxide is higher than a predetermined concentration, the controller 6 adjusts the flow rate of at least one of the raw material gas and the combustion air, or stops the fuel cell system 100 from operating. Therefore, it is important to check whether or not the CO sensor 5 is operating normally.

Next, an operation check of the CO sensor 5 (i.e., an abnormality check of the CO sensor 5), which is a feature of the present invention, is described with reference to Fig. 1 and Fig. 2.

Fig. 2 is a flowchart showing schematic operations of the fuel cell system according to Embodiment 1.

As shown in Fig. 2, the controller 6 determines whether or not an operation command has been inputted to the fuel cell system 100 (the hydrogen generation apparatus 101) (step S101)). Examples of a case where an operation command has been inputted to the fuel cell system 100 include: a case where a user of the fuel cell system 100 has operated a remote controller, which is not shown, to cause the fuel cell system 100 to operate; and a case where an operation start time set for the fuel cell system 100 in advance has arrived.

If an operation command to operate the fuel cell system 100 has not been inputted (No in step S101), the controller 6 repeats step S101 until an operation command to operate the fuel cell system 100 is inputted.

If an operation command has been inputted to the fuel cell system 100 (Yes in step S101), the controller 6 proceeds to step S102.

In step S102, the controller 6 determines whether or not the temperature T of the catalyst in the hydrogen generator 1, which is detected by the temperature detector la, is lower than or equal to the first temperature T1. As mentioned above, the first temperature T1 herein is a temperature at which carbon deposition onto the catalyst does not occur even when the raw material gas alone is fed to the catalyst in the hydrogen generator 1.

If the temperature T of the catalyst is higher than the first temperature T1 (No in step S102), the controller 6 refrains from starting up the fuel cell system 100 until the temperature T of the catalyst becomes lower than or equal to the first temperature T1. It should be noted that if the temperature T is higher than the first temperature T1 (No in step S102), the controller 6 may prohibit start-up of the hydrogen generation apparatus 101 and the fuel cell system 100, and end the program.

On the other hand, if the temperature T of the catalyst is lower than the first temperature T1 (Yes in step S102), the controller 6 proceeds to the next step S103.

In step S103, the controller 6 starts a start-up operation of the fuel cell system 100. Specifically, the controller 6 closes (opens) the first on-off valve 10 and opens the second on-off valve 11 to form a passage such that the raw material gas is supplied to the combustor 2 through the bypass passage 12, and drives the combustion air supply device 8 and the raw material gas supply device 4 to supply combustion air and the raw material gas serving as a combustion gas to the combustor 2. In the combustor 2, the combustion air and the combustion gas are ignited, and thereby combustion starts.

At the time, the controller 6 controls the raw material gas supply device 4 and the combustion air supply device 8 such that the air-fuel ratio in the combustor 2 becomes a first air-fuel ratio (i.e., in a predetermined range), which allows the combustor 2 to perform stable perfect combustion. Since the first air-fuel ratio herein varies depending on the structure of the combustor 2 to use, the type of the raw material gas to supply, the flow rate of the raw material gas to supply, etc., an air-fuel ratio that will not cause generation of carbon monoxide in the flue gas from the combustor 2 to use may be experimentally obtained in advance as the first air-fuel ratio. It should be noted that the air-fuel ratio at the time of ignition in the combustor 2 may be different from the first air-fuel ratio, which is the air-fuel ratio after the ignition.

When the combustion has started in the combustor 2, the controller 6 controls at least one of the raw material gas supply device 4 and the combustion air supply device 8 to change the flow rate(s) such that the air-fuel ratio, which is the ratio between the combustion air and the raw material gas that are supplied to the combustor 2, becomes a second air-fuel ratio deviating from the predetermined range (step SI04). As a result, imperfect combustion occurs in the combustor 2, and thereby carbon monoxide is generated.

The second air-fuel ratio herein may be experimentally obtained in advance in the following manner: change the air-fuel ratio, and when the carbon monoxide concentration in the flue gas has become between a lower limit threshold (A) and an upper limit threshold (B) during the change, the air-fuel ratio at the time is obtained as the second air-fuel ratio.

It should be noted that, desirably, the second air-fuel ratio is set to be higher than the first air-fuel ratio. The reason for this is as follows: when the air-fuel ratio is changed to be lower than the first air-fuel ratio, the carbon monoxide concentration in the flue gas increases rapidly, whereas when the air-fuel ratio is changed to be higher than the first air-fuel ratio, the carbon monoxide concentration increases relatively gradually. However, if the air-fuel ratio is increased excessively, there is a risk of fire extinction. Therefore, it is necessary to know sufficiently the combustion characteristics of the combustor 2 to use.

The lower limit threshold (A) is set to be higher than or equal to a lower limit concentration detectable by the CO sensor 5. The upper limit threshold (B) is set to be lower than or equal to a concentration that is detectable by the CO sensor 5 and that will not affect the human body even if emission of carbon monoxide of the concentration continues during the change of the air-fuel ratio to the second air-fuel ratio. The lower limit threshold (A) may be 100 ppm, for example. The upper limit threshold (B) may be 500 ppm or 2400 ppm, for example.

Next, the controller 6 determines whether or not the concentration C of carbon monoxide in the flue gas, which is detected by the CO sensor 5, is in a predetermined concentration range between the lower limit threshold (A) and the upper limit threshold (B) (step S105). If the concentration C detected by the CO sensor 5 is in the predetermined range (Yes in step S105), the controller 6 determines that the CO sensor 5 is in a normal state (step S106). The controller 6 changes the air-fuel ratio back to the first air-fuel ratio and continues the start-up operation (step S107). Then, the controller 6 ends the program.

On the other hand, if the concentration C detected by the CO sensor 5 is out of the predetermined range (No in step S105), the controller 6 determines that the CO sensor 5 is in an abnormal state (step S108), and causes the notification device 14 to give a notification that the CO sensor 5 is in an abnormal state (step S109). Subsequently, the controller 6 stops the fuel cell system 100 (step S110) and ends the program. It should be noted that the controller 6 may be configured to prohibit the fuel cell system 100 from restarting after stopping the fuel cell system 100 in step S110.

As described above, the fuel cell system 100 according to Embodiment 1 is configured to check whether the CO sensor 5, which monitors the carbon monoxide concentration in the flue gas, is in a normal state or in an abnormal state at the time of performing the start-up operation in which the combustion by the combustor 2 of the fuel cell system 100 starts. This configuration makes it possible to provide a highly safe fuel cell system.

Further, when the operation check of the CO sensor 5 is performed, the air-fuel ratio of the combustor 2 is changed to cause carbon monoxide to be contained in the flue gas. Therefore, the operation check of the CO sensor 5 does not require such equipment as calibration gas supply equipment. This makes it possible to perform the operation check in a relatively simple manner.

Still further, the raw material gas is supplied to the combustor 2 as a combustion gas to change the air-fuel ratio, thereby causing carbon monoxide to be contained in the flue gas. In this manner, the carbon monoxide concentration can be readily and stably kept within the predetermined range. This makes it possible to reduce the possibility of erroneous detection in which the CO sensor 5 in a normal state is determined to be in an abnormal state due to the fact that the generated carbon monoxide is out of the predetermined range.

Still further, the raw material gas is flowed to the hydrogen generator 1 when the catalyst temperature in the hydrogen generator 1 is lower than or equal to the first temperature T1. This makes it possible to suppress degradation in the performance of the hydrogen generator 1 due to carbon deposition onto the catalyst.

Still further, the fuel cell system 100 according to Embodiment 1 is configured to be stopped when the CO sensor 5 is determined to be in an abnormal state. This configuration makes it possible to provide a highly safe fuel cell system.

The fuel cell system 100 according to Embodiment 1 is configured such that the hydrogen generator 1 includes the temperature detector la, which detects the catalyst temperature in the hydrogen generator 1. However, the configuration of the fuel cell system 100 is not thus limited. For example, a correlation may be experimentally obtained between the catalyst temperature in the hydrogen generator 1 and the following time period: a period after the operation of the fuel cell system 100 has shifted from a power generation operation to a stop operation (i.e., after an operation stop signal to stop the fuel cell system 100 (the hydrogen generation apparatus 101) from operating has been inputted), the period starting from when the combustion by the combustor 2 has ended. The correlation may be stored in the controller 6 in advance, and when a predetermined period (a first period) has elapsed after the combustion has ended, the operation check of the CO sensor 5 may be performed.

The fuel cell system 100 according to Embodiment 1 is configured such that the operation check of the CO sensor 5 is performed after a start-up signal to start up the fuel cell system 100 has been inputted to the controller 6. However, the configuration of the fuel cell system 100 is not thus limited. Alternatively, for example, the fuel cell system 100 may be configured such that the operation check of the CO sensor 5 is performed while a stop operation is being performed after an operation stop signal to stop the fuel cell system 100 from operating has been inputted to the controller 6. As another alternative example, the fuel cell system 100 may be configured such that the operation check of the CO sensor 5 is performed while the fuel cell system 100 is in a standby state (i.e., a state after the fuel cell system 100 has stopped operating and before the next start-up command to start up the fuel cell system 100 is inputted).

### [Variation 1]

Next, a variation of the fuel cell system 100 (the hydrogen generation apparatus 101) according to Embodiment 1 is described.

A hydrogen generation apparatus according to Variation 1 of Embodiment 1 includes: a hydrogen generator configured to generate a hydrogen-containing fuel gas from a raw material gas containing a hydrocarbon; a combustor configured to heat the hydrogen generator; a combustion gas supply device configured to supply a combustion gas to the combustor; an air supply device configured to supply air to the combustor; a CO sensor configured to detect carbon monoxide contained in a flue gas discharged from the combustor; and a controller. In a case where a first period set in advance has elapsed after combustion by the combustor has ended, the controller: causes the combustion gas supply device to supply the raw material gas as the combustion gas to the combustor; and controls an air-fuel ratio to be out of a predetermined range, the air-fuel ratio being a ratio between the air and the combustion gas that are supplied to the combustor. In a case where the CO sensor does not detect a predetermined carbon monoxide concentration, the controller: determines that the CO sensor is in an abnormal state; gives a notification that the CO sensor is in an abnormal state; or performs control to stop the hydrogen generation apparatus from operating.

In the hydrogen generation apparatus according to Variation 1, the controller may refrain from starting up the hydrogen generation apparatus in a case where a start-up signal to start up the hydrogen generation apparatus has been inputted before the first period elapses after the combustion by the combustor has ended.

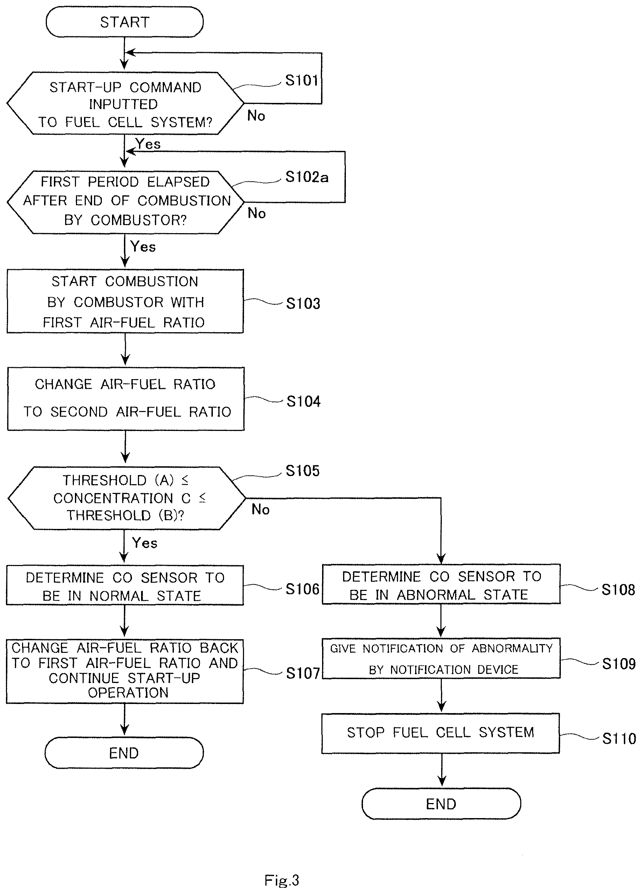

Hereinafter, one example of the hydrogen generation apparatus according to Variation 1 and a fuel cell system including the same is described with reference to Fig. 3. The hydrogen generation apparatus according to Variation 1 and the fuel cell system including the same have the same configurations as those of the hydrogen generation apparatus according to Embodiment 1 and the fuel cell system including the same. Therefore, in the description below, operations of the fuel cell system (the hydrogen generation apparatus) are described.

Fig. 3 is a flowchart showing schematic operations of the fuel cell system according to Variation 1 of Embodiment 1.

As shown in Fig. 3, although the operations of the fuel cell system 100 according to Variation 1 are fundamentally the same as the operations of the fuel cell system 100 according to Embodiment 1, there is a difference in that step S102a is performed instead of step S102.

Specifically, in step S102a, the controller 6 determines whether or not a first period has elapsed after the combustion by the combustor 2 has ended. The first period herein is obtained in advance through an experiment or the like. The first period is set as a time from when the operation of combusting the combustion gas in the combustor 2 has ended to when the temperature of the hydrogen generator 1 has become lower than or equal to the first temperature.

This configuration allows the controller 6 to determine that the temperature of the hydrogen generator 1 has become lower than or equal to the first temperature even in a case where the temperature detector la is eliminated or the temperature detector 1a has broken down.

The fuel cell system 100 according to Variation 1 with the above-described configuration provides the same operational advantages as those provided by the fuel cell system 100 according to Embodiment 1.

The fuel cell system 100 according to Variation 1 is configured such that the operation check of the CO sensor 5 is performed after a start-up signal to start up the fuel cell system 100 has been inputted to the controller 6. However, the configuration of the fuel cell system 100 is not thus limited. Alternatively, for example, the fuel cell system 100 may be configured such that the operation check of the CO sensor 5 is performed while a stop operation is being performed after an operation stop signal to stop the fuel cell system 100 from operating has been inputted to the controller 6. As another alternative example, the fuel cell system 100 may be configured such that the operation check of the CO sensor 5 is performed while the fuel cell system 100 is in a standby state.

### (Embodiment 2)

In a hydrogen generation apparatus according to Embodiment 2, the controller is configured to cause the hydrogen generator to be cooled down such that the temperature of the hydrogen generator becomes lower than or equal to the first temperature in a case where the temperature of the hydrogen generator is higher than the first temperature and a start-up signal to start up the hydrogen generation apparatus has been inputted.

In the hydrogen generation apparatus according to Embodiment 2, the controller may be configured to cause the air supply device to supply air to the combustor, such that the hydrogen generator is cooled down and the temperature of the hydrogen generator becomes lower than or equal to the first temperature.

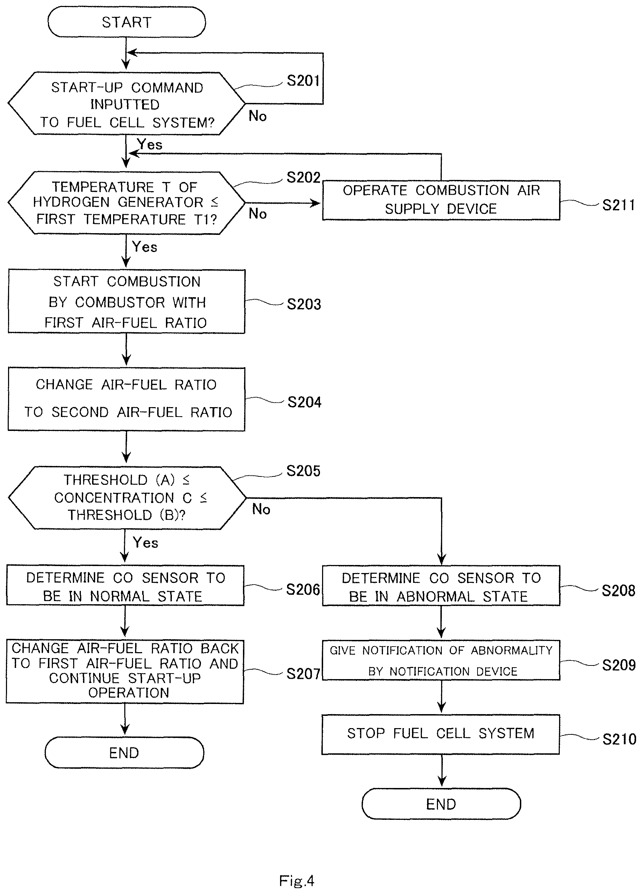

Hereinafter, one example of the hydrogen generation apparatus according to Embodiment 2 and a fuel cell system including the same is described with reference to Fig. 4.

It should be noted that the hydrogen generation apparatus according to Embodiment 2 and the fuel cell system including the same have the same configurations as those of the hydrogen generation apparatus according to Embodiment 1 and the fuel cell system including the same. Therefore, in the description below, operations of the fuel cell system (the hydrogen generation apparatus) are described.

Fig. 4 is a flowchart showing schematic operations of the fuel cell system according to Embodiment 2.

As shown in Fig. 4, the controller 6 determines whether or not an operation command has been inputted to the fuel cell system 100 (step S201).

If an operation command to operate the fuel cell system 100 has not been inputted (No in step S201), the controller 6 repeats step S201 until an operation command to operate the fuel cell system 100 is inputted.

If an operation command has been inputted to the fuel cell system 100 (Yes in step S201), the controller 6 proceeds to step S202.

In step S202, the controller 6 determines whether or not the temperature T of the catalyst in the hydrogen generator 1, which is detected by the temperature detector 1a, is lower than or equal to the first temperature T1. The first temperature T1 herein is a temperature at which carbon deposition onto the catalyst does not occur even when the raw material gas alone is fed to the catalyst in the hydrogen generator 1.

If the temperature T is higher than the first temperature T1 (No in step S202), the controller 6 proceeds to step S211.

In step S211, the controller 6 operates the combustion air supply device 8 to supply air to the combustor 2, thereby starting to cool down the catalyst in the hydrogen generator 1. The controller 6 then returns to step S202 and continues the cooling down of the catalyst until the temperature T has become lower than or equal to the first temperature T1 (Yes in step S202).

If the temperature T of the catalyst is lower than the first temperature T1 (Yes in step S202), the controller 6 proceeds to step S203. It should be noted that since the flow from step S203 to step S210 is the same as the flow from step S103 to step S110 in Embodiment 1, the description thereof is omitted.

The fuel cell system 100 according to Embodiment 2 with the above-described configuration provides the same operational advantages as those provided by the fuel cell system 100 according to Embodiment 1.

In the fuel cell system 100 according to Embodiment 2, the combustion air supply device 8 supplies air to the combustor 2 to cool down the catalyst in the hydrogen generator 1. Therefore, compared to a case where such cooling down of the catalyst is not performed, a time required for the temperature T of the catalyst in the hydrogen generator 1 to decrease to be lower than or equal to the temperature T1 can be reduced, and a time from when the operation command has been inputted to when the fuel cell system 100 starts up can be reduced.

### (Embodiment 3)

In a hydrogen generation apparatus according to Embodiment 3, the controller is configured to cause the hydrogen generator to be cooled down such that the temperature of the hydrogen generator becomes lower than or equal to the first temperature in a case where the temperature of the hydrogen generator is higher than the first temperature and a start-up signal to start up the hydrogen generation apparatus has been inputted.

A fuel cell system according to Embodiment 3 includes: the above hydrogen generation apparatus; a fuel cell configured to generate electric power by causing a reaction between an oxidizing gas and a hydrogen-containing gas supplied from the hydrogen generation apparatus; a casing, in which the hydrogen generation apparatus and the fuel cell are housed; and a ventilator configured to ventilate an interior of the casing. The controller is configured to operate the ventilator to cool down the hydrogen generator such that the temperature of the hydrogen generator becomes lower than or equal to the first temperature.

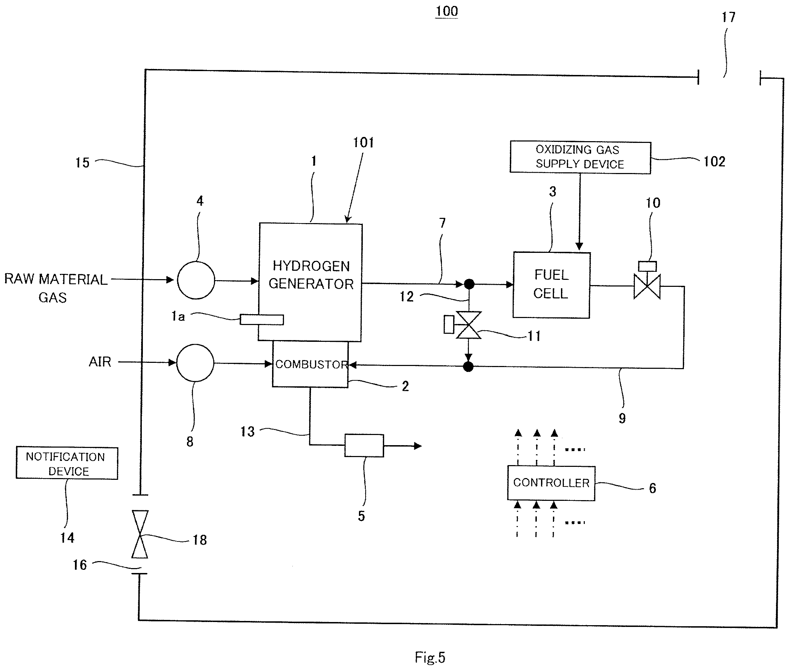

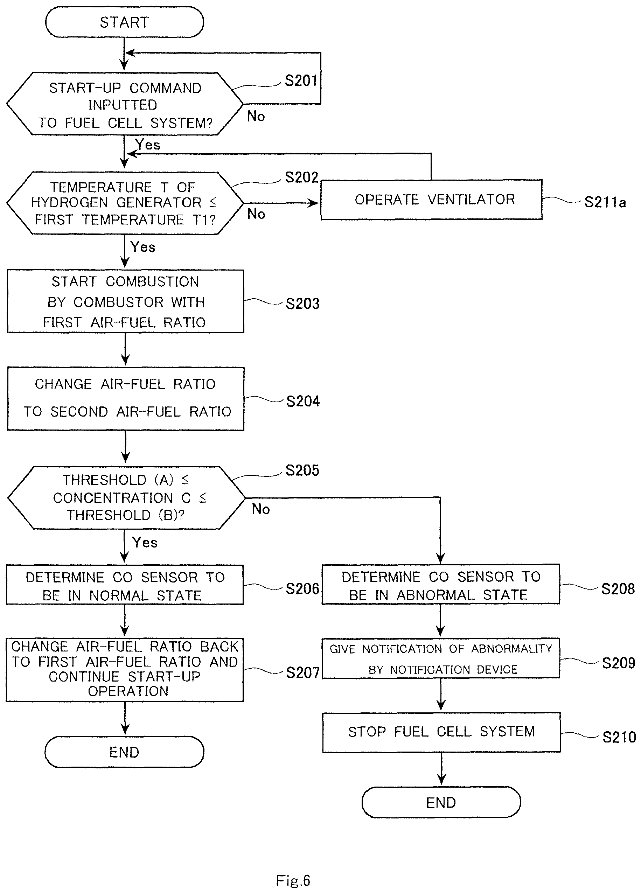

Hereinafter, one example of the fuel cell system according to Embodiment 3 is described with reference to Fig. 5 and Fig. 6.

### [Configurations of Hydrogen Generation Apparatus and Fuel Cell System]

Fig. 5 is a block diagram showing schematic configurations of the hydrogen generation apparatus according to Embodiment 3 and the fuel cell system including the same.

As shown in Fig. 5, although the fundamental configuration of the fuel cell system 100 according to Embodiment 3 is the same as that of the fuel cell system 100 according to Embodiment 1, the fuel cell system 100 according to Embodiment 3 is different from the fuel cell system 100 according to Embodiment 1, in that the fuel cell system 100 according to Embodiment 3 further includes a casing 15 and a ventilator 17. The casing 15 houses the hydrogen generation apparatus 101 and other component devices.

Specifically, the casing 15 houses the component devices of the fuel cell system 100 except the notification device 14. The casing 15 is provided with an exhaust outlet 16 and an air inlet 17 such that the casing 15 is in communication with the outside air. The ventilator 18 is disposed near the exhaust outlet 16.

The ventilator 18 is configured to ventilate the interior of the casing 15. For example, a fan or the like can be used as the ventilator 18. It should be noted that the ventilator 18 may alternatively be provided near the air inlet 17.

### [Operations of Fuel Cell System]

Next, operations of the fuel cell system according to Embodiment 3 are described with reference to Fig. 5 and Fig. 6.

Fig. 6 is a flowchart showing schematic operations of the fuel cell system according to Embodiment 3.

As shown in Fig. 6, although the operations of the fuel cell system 100 according to Embodiment 3 are fundamentally the same as the operations of the fuel cell system 100 according to Embodiment 2, there is a difference in that step S211a is performed instead of step S211. Specifically, the controller 6 operates the ventilator 18 to ventilate the interior of the casing 15, thereby starting to cool down the catalyst in the hydrogen generator 1 (step S211a).

The fuel cell system 100 according to Embodiment 3 with the above-described configuration provides the same operational advantages as those provided by the fuel cell system 100 according to Embodiment 2.

In Embodiment 3, only the ventilator 18 is operated in step S211a. However, Embodiment 3 is not thus limited. As an alternative example, both the ventilator 18 and the combustion air supply device 8 may be operated in step S211a. As another alternative example, not the ventilator 18 but the combustion air supply device 8 and/or the oxidizing gas supply device 102 may be operated to ventilate the interior of the casing 15.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art.

### Industrial Applicability

The hydrogen generation apparatus, the fuel cell system including the same, the method of operating the hydrogen generation apparatus, and the method of operating the fuel cell system according to the present invention make it possible to perform the operation check of a CO sensor more readily than conventional art, and therefore useful in the field of fuel cells.

### Reference Signs List

- 1: hydrogen generator
- 1a: temperature detector
- 2: combustor
- 3: fuel cell
- 4: raw material gas supply device
- 5: CO sensor
- 6: controller
- 7: fuel gas passage
- 8: combustion air supply device
- 9: off fuel gas passage
- 10: first on-off valve
- 11: second on-off valve
- 12: bypass passage
- 13: flue gas passage
- 14: notification device
- 15: casing
- 16: exhaust outlet
- 17: air inlet
- 18: ventilator
- 100: fuel cell system
- 101: hydrogen generation apparatus
- 102: oxidizing gas supply device

## Claims

1. A hydrogen generation apparatus comprising:
a hydrogen generator (1) configured to generate a hydrogen-containing fuel gas from a raw material gas;
a combustor (2) configured to heat the hydrogen generator (1);
a combustion gas supply device configured to supply a combustion gas to the combustor (2);
an air supply device (8) configured to supply air to the combustor (2);
a CO sensor (5) configured to detect carbon monoxide contained in a flue gas discharged from the combustor (2); and
a controller (6),
**characterized in that**
in a case where a temperature of the hydrogen generator (1) is lower than or equal to a first temperature set in advance, the first temperature being lower than temperatures at which carbon deposition onto a catalyst in the hydrogen generator occurs when the raw material gas is alone is fed to the catalyst, or in a case where a first period set in advance has elapsed after combustion by the combustor (2) has ended, the first period being a time from when an operation of combusting the combustion gas in the combustor (2) has ended to when the temperature of the hydrogen generator (1) has become lower than or equal to the first temperature, the controller (6) is configured to:
cause the combustion gas supply device to supply the raw material gas as the combustion gas to the combustor (2); and
control an air-fuel ratio to be out of a predetermined range, the air-fuel ratio being a ratio between the air and the combustion gas that are supplied to the combustor (2), and
in a case where the CO sensor (5) does not detect a predetermined carbon monoxide concentration, the controller (6) is configured to:
determine that the CO sensor (5) is in an abnormal state;
give a notification that the CO sensor (5) is in an abnormal state; or
perform control to stop the hydrogen generation apparatus from operating,
wherein the controller (6) is configured to cause the hydrogen generator (1) to be cooled down such that the temperature of the hydrogen generator (1) becomes lower than or equal to the first temperature in a case where the temperature of the hydrogen generator (1) is higher than the first temperature and a start-up signal to start up the hydrogen generation apparatus has been inputted.

2. The hydrogen generation apparatus according to claim 1, wherein the controller (6) is configured to cause the air supply device (8) to supply air to the combustor (2), such that the hydrogen generator (1) is cooled down and the temperature of the hydrogen generator (1) becomes lower than or equal to the first temperature.

3. A fuel cell system comprising:
the hydrogen generation apparatus (101) according to claim 1 or 2; and
a fuel cell (3) configured to generate electric power by causing a reaction between an oxidizing gas and a hydrogen-containing gas supplied from the hydrogen generation apparatus.

4. The fuel cell system according to claim 3, further comprising:
a casing (15), in which the hydrogen generation apparatus (101) and the fuel cell (3) are housed; and
a ventilator (18) configured to ventilate an interior of the casing (15), wherein
the controller (6) is configured to operate the ventilator (18) to cool down the hydrogen generator (1) such that the temperature of the hydrogen generator (1) becomes lower than or equal to the first temperature.

5. A method of operating a hydrogen generation apparatus, the hydrogen generation apparatus including:
a hydrogen generator (1) configured to generate a hydrogen-containing fuel gas from a raw material gas;
a combustor (2) configured to heat the hydrogen generator (1);
a combustion gas supply device configured to supply a combustion gas to the combustor (2);
an air supply device (8) configured to supply air to the combustor (2); and
a CO sensor (5) configured to detect carbon monoxide contained in a flue gas discharged from the combustor (2),
**characterized in that** the method comprising:
a step (a) of determining whether or not a temperature of the hydrogen generator (1) is lower than or equal to a first temperature set in advance, the first temperature being lower than temperatures at which carbon deposition onto a catalyst in the hydrogen generator occurs when the raw material gas is alone is fed to the catalyst;
a step (b) of causing the combustor (2) to combust the combustion gas supplied from the combustion gas supply device and the air supplied from the air supply device (8) after it is determined in the step (a) that the temperature of the hydrogen generator (1) is lower than or equal to the first temperature set in advance, or that a first period set in advance has elapsed after the combustion by the combustor (2) has ended;
a step (c) of changing an air-fuel ratio to increase a carbon monoxide concentration in the combustor (2), the air-fuel ratio being a ratio between the air and the combustion gas that are supplied to the combustor (2);
a step (d) of checking whether or not the CO sensor (5) detects a predetermined concentration of carbon monoxide after the step (c);
a step (1) of inputting a start-up signal to start up the hydrogen generation apparatus; and
a step (3) of causing the air supply device (8) to supply air to the combustor (2) after the step (1) such that the hydrogen generator (1) is cooled down and the temperature of the hydrogen generator (1) becomes lower than or equal to the first temperature if it is determined in the step (a) that the temperature of the hydrogen generator (1) is higher than the first temperature set in advance.

6. A method of operating a fuel cell system, the fuel cell system including:
a hydrogen generation apparatus (101) including a hydrogen generator (1) configured to generate a hydrogen-containing fuel gas from a raw material gas, a combustor (2) configured to heat the hydrogen generator (1), a combustion gas supply device configured to supply a combustion gas to the combustor (2), an air supply device (8) configured to supply air to the combustor (2), and a CO sensor (5) configured to detect carbon monoxide contained in a flue gas discharged from the combustor (2); and
a fuel cell (3) configured to generate electric power by causing a reaction between an oxidizing gas and a hydrogen-containing gas supplied from the hydrogen generation apparatus,
the fuel cell system further including a casing, in which the hydrogen generation apparatus and the fuel cell are housed, and a ventilator configured to ventilate an interior of the casing, and
**characterized in that** the method comprising:
a step (a) of determining whether or not a temperature of the hydrogen generator (1) is lower than or equal to a first temperature set in advance, the first temperature being lower than temperatures at which carbon deposition onto a catalyst in the hydrogen generator occurs when the raw material gas is alone is fed to the catalyst;
a step (b) of causing the combustor (2) to combust the combustion gas supplied from the combustion gas supply device and the air supplied from the air supply device (8) after it is determined in the step (a) that the temperature of the hydrogen generator (1) is lower than or equal to the first temperature set in advance, or that a first period set in advance has elapsed after the combustion by the combustor (2) has ended;
a step (c) of changing an air-fuel ratio to increase a carbon monoxide concentration in the combustor (2), the air-fuel ratio being a ratio between the air and the combustion gas that are supplied to the combustor (2);
a step (d) of checking whether or not the CO sensor (5) detects a predetermined concentration of carbon monoxide after the step (c);
a step (4) of inputting a start-up signal to start up the fuel cell system; and
a step (6) of operating the ventilator (18) after the step (4) to cool down the hydrogen generator (1) such that the temperature of the hydrogen generator (1) becomes lower than or equal to the first temperature if it is determined in the step (a) that the temperature of the hydrogen generator (1) is higher than the first temperature set in advance.

## Patentansprüche

1. Wasserstofferzeugungsvorrichtung umfassend:
einen Wasserstoffgenerator (1), der dazu eingerichtet ist, ein wasserstoffhaltiges Brenngas aus einem Rohmaterialgas zu erzeugen;
eine Brennkammer (2), die dazu eingerichtet ist, den Wasserstoffgenerator (1) zu erwärmen;
eine Verbrennungsgas-Zufuhrvorrichtung, die dazu eingerichtet ist, ein Verbrennungsgas an die Brennkammer (2) zu liefern;
eine Luftversorgungsvorrichtung (8), die dazu eingerichtet ist, Luft an die Brennkammer (2) zu liefern;
einen CO-Sensor (5), der dazu eingerichtet ist, Kohlenmonoxid zu erfassen, das in einem Rauchgas enthalten ist, das von der Brennkammer (2) abgegeben wird; und
eine Steuereinheit (6),
**dadurch gekennzeichnet, dass**
in einem Fall, in dem eine Temperatur des Wasserstoffgenerators (1) niedriger oder gleich einer im Voraus festgelegten ersten Temperatur ist, wobei die erste Temperatur niedriger als die Temperaturen ist, bei denen eine Kohlenstoffablagerung auf einem Katalysator in dem Wasserstoffgenerator auftritt, wenn das Rohmaterialgas allein dem Katalysator zugeführt wird, oder in einem Fall, in dem eine im Voraus eingestellte erste Periode verstrichen ist, nachdem die Verbrennung durch die Brennkammer (2) beendet ist, wobei die erste Periode eine Zeit ab dem Zeitpunkt, zu dem ein Verbrennungsvorgang des Verbrennungsgases in der Brennkammer (2) beendet ist, bis zu dem Zeitpunkt ist, zu dem die Temperatur des Wasserstoffgenerators (1) niedriger oder gleich der ersten Temperatur geworden ist, die Steuereinheit (6) dazu eingerichtet ist:
zu veranlassen, dass die Verbrennungsgaszufuhrvorrichtung das Rohmaterialgas als das Verbrennungsgas der Brennkammer (2) zuführt; und
ein Luft-Kraftstoff-Verhältnis so zu steuern, dass es außerhalb eines vorbestimmten Bereichs liegt, wobei das Luft-Kraftstoff-Verhältnis ein Verhältnis zwischen der Luft und dem Verbrennungsgas ist, die der Brennkammer (2) zugeführt werden, und
in einem Fall, in dem der CO-Sensor (5) keine vorbestimmte Kohlenmonoxidkonzentration erfasst, die Steuereinheit (6) dazu eingerichtet ist:
zu bestimmen, dass der CO-Sensor (5) in einem abnormalen Zustand ist;
eine Benachrichtigung auszugeben, dass der CO-Sensor (5) in einem abnormalen Zustand ist; oder
eine Steuerung auszuführen, um die Wasserstofferzeugungsvorrichtung daran zu hindern zu arbeiten,
wobei die Steuereinheit (6) dazu eingerichtet ist zu bewirken, dass der Wasserstoffgenerator (1) so heruntergekühlt wird, dass die Temperatur des Wasserstoffgenerators (1) niedriger oder gleich der ersten Temperatur in einem Fall wird, in dem die Temperatur des Wasserstoffgenerators (1) höher ist als die erste Temperatur und ein Anlaufsignal zum Starten der Wasserstofferzeugungsvorrichtung eingegeben worden ist.

2. Wasserstofferzeugungsvorrichtung nach Anspruch 1, bei der die Steuereinheit (6) dazu eingerichtet ist, die Luftzuführvorrichtung (8) zu veranlassen, Luft an die Brennkammer (2) zu liefern, so dass der Wasserstoffgenerator (1) abgekühlt wird und die Temperatur des Wasserstoffgenerators (1) niedriger oder gleich der ersten Temperatur wird.

3. Brennstoffzellensystem, umfassend:
die Wasserstofferzeugungsvorrichtung (101) nach Anspruch 1 oder 2; und
eine Brennstoffzelle (3), die dazu eingerichtet ist, elektrische Leistung zu erzeugen, indem eine Reaktion zwischen einem Oxidationsgas und einem von der Wasserstofferzeugungsvorrichtung zugeführten wasserstoffhaltigen Gas bewirkt wird.

4. Brennstoffzellensystem nach Anspruch 3, weiterhin umfassend:
ein Gehäuse (15), in dem die Wasserstofferzeugungsvorrichtung (101) und die Brennstoffzelle (3) untergebracht sind; und
einen Ventilator (18), der dazu eingerichtet ist, einen Innenraum des Gehäuses (15) zu belüften, wobei
die Steuereinheit (6) dazu eingerichtet ist, den Ventilator (18) zu betreiben, um den Wasserstoffgenerator (1) derart abzukühlen, dass die Temperatur des Wasserstoffgenerators (1) niedriger oder gleich der ersten Temperatur wird.

5. Verfahren zum Betreiben einer Wasserstofferzeugungsvorrichtung, wobei die Wasserstofferzeugungsvorrichtung umfasst:
einen Wasserstoffgenerator (1), der dazu eingerichtet ist, ein wasserstoffhaltiges Brenngas aus einem Rohmaterialgas zu erzeugen;
eine Brennkammer (2), die dazu eingerichtet ist, den Wasserstoffgenerator (1) zu erwärmen;
eine Verbrennungsgas-Zufuhrvorrichtung, die dazu eingerichtet ist, ein Verbrennungsgas an die Brennkammer (2) zu liefern;
eine Luftversorgungsvorrichtung (8), die dazu eingerichtet ist, Luft an die Brennkammer (2) zu liefern; und
einen CO-Sensor (5), der dazu eingerichtet ist, Kohlenmonoxid zu erfassen, das in einem Rauchgas enthalten ist, das von der Brennkammer (2) abgegeben wird,
**dadurch gekennzeichnet, dass** das Verfahren umfasst:
einen Schritt (a) zum Bestimmen, ob eine Temperatur des Wasserstoffgenerators (1) niedriger oder gleich einer ersten im Voraus eingestellten Temperatur ist oder nicht, wobei die erste Temperatur niedriger ist als die Temperaturen, bei denen die Kohlenstoffablagerung auf einem Katalysator im Wasserstoffgenerator auftritt, wenn das Rohmaterialgas allein dem Katalysator zugeführt wird;
einen Schritt (b), um die Brennkammer (2) zu veranlassen, das von der Verbrennungsgaszuführvorrichtung zugeführte Verbrennungsgas und die von der Luftzuführvorrichtung (8) zugeführte Luft zu verbrennen, nachdem in Schritt (a) bestimmt wurde, dass die Temperatur des Wasserstoffgenerators (1) niedriger als oder gleich der ersten im Voraus eingestellten Temperatur ist oder dass eine im Voraus festgelegte erste Periode verstrichen ist, nachdem die Verbrennung durch die Brennkammer (2) beendet ist;
einen Schritt (c) zum Ändern eines Luft-Kraftstoff-Verhältnisses, um eine Kohlenmonoxidkonzentration in der Brennkammer (2) zu erhöhen, wobei das Luft-Kraftstoff-Verhältnis ein Verhältnis zwischen der Luft und dem Verbrennungsgas ist, die der Brennkammer (2) zugeführt werden;
einen Schritt (d) zum Überprüfen, ob der CO-Sensor (5) eine vorbestimmte Konzentration von Kohlenmonoxid nach dem Schritt (c) erfasst oder nicht;
einen Schritt (1) zum Eingeben eines Startsignals zum Starten der Wasserstofferzeugungsvorrichtung; und
einen Schritt (3) zum Bewirken, dass die Luftzuführvorrichtung (8) Luft zu der Brennkammer (2) nach dem Schritt (1) zuführt, so dass der Wasserstoffgenerator (1) heruntergekühlt wird und die Temperatur des Wasserstoffgenerators (1) niedriger als oder gleich der ersten Temperatur wird, wenn in Schritt (a) bestimmt wird, dass die Temperatur des Wasserstoffgenerators (1) höher ist als die im Voraus eingestellte erste Temperatur.

6. Verfahren zum Betreiben eines Brennstoffzellensystems, wobei das Brennstoffzellensystem umfasst:
eine Wasserstofferzeugungsvorrichtung (101), die einen Wasserstoffgenerator (1) umfasst, der dazu eingerichtet ist, ein wasserstoffhaltiges Brenngas aus einem Rohmaterialgas zu erzeugen, eine Brennkammer (2), die dazu eingerichtet ist, den Wasserstoffgenerator (1) zu erwärmen, eine Brenngaszufuhrvorrichtung, die dazu eingerichtet ist, der Brennkammer (2) ein Verbrennungsgas zuzuführen, eine Luftversorgungsvorrichtung (8), die Luft an die Brennkammer (2) liefert, und einen CO-Sensor (5), der dazu eingerichtet ist, Kohlenmonoxid zu erfassen, das in einem von der Brennkammer (2) ausgegebenen Brenngas enthalten ist; und
eine Brennstoffzelle (3), die dazu eingerichtet ist, elektrische Leistung zu erzeugen, indem sie eine Reaktion zwischen einem Oxidationsgas und einem von der Wasserstofferzeugungsvorrichtung zugeführten wasserstoffhaltigen Gas bewirkt, wobei
das Brennstoffzellensystem weiterhin ein Gehäuse, in dem die Wasserstofferzeugungsvorrichtung und die Brennstoffzelle untergebracht sind, und einen Ventilator umfasst, der dazu eingerichtet ist, ein Inneres des Gehäuses zu belüften, und
**dadurch gekennzeichnet, dass** das Verfahren umfasst:
einen Schritt (a) zum Bestimmen, ob eine Temperatur des Wasserstoffgenerators (1) niedriger oder gleich einer ersten im Voraus eingestellten Temperatur ist oder nicht, wobei die erste Temperatur niedriger ist als die Temperaturen, bei denen die Kohlenstoffablagerung auf einem Katalysator im Wasserstoffgenerator auftritt, wenn das Rohmaterialgas allein dem Katalysator zugeführt wird;
einen Schritt (b), um die Brennkammer (2) dazu zu bringen, das von der Verbrennungsgaszuführvorrichtung zugeführte Verbrennungsgas und die von der Luftzuführvorrichtung (8) zugeführte Luft zu verbrennen, nachdem in Schritt (a) bestimmt wurde, dass die Temperatur des Wasserstoffgenerators (1) niedriger als oder gleich der ersten im Voraus eingestellten Temperatur ist, oder dass eine im Voraus festgelegte erste Periode verstrichen ist, nachdem die Verbrennung durch die Brennkammer (2) beendet ist;
einen Schritt (c) zum Ändern eines Luft-Kraftstoff-Verhältnisses, um eine Kohlenmonoxidkonzentration in der Brennkammer (2) zu erhöhen, wobei das Luft-Kraftstoff-Verhältnis ein Verhältnis zwischen der Luft und dem Verbrennungsgas ist, die der Brennkammer (2) zugeführt werden;
einen Schritt (d) zum Überprüfen, ob der CO-Sensor (5) eine vorbestimmte Konzentration von Kohlenmonoxid nach dem Schritt (c) erfasst oder nicht;
einen Schritt (4) zum Eingeben eines Startsignals zum Starten des Brennstoffzellensystems; und
einen Schritt (6) zum Betreiben des Ventilators (18) nach dem Schritt (4), um den Wasserstoffgenerator (1) so abzukühlen, dass die Temperatur des Wasserstoffgenerators (1) niedriger oder gleich der ersten Temperatur wird, wenn in Schritt (a) bestimmt wird, dass die Temperatur des Wasserstoffgenerators (1) höher ist als die vorher eingestellte erste Temperatur.

## Revendications

1. Appareil de génération d'hydrogène, comprenant :
un générateur d'hydrogène (1) configuré pour générer un gaz combustible contenant de l'hydrogène à partir d'une matière brute gazeuse ;
une chambre de combustion (2) configurée pour chauffer le générateur d'hydrogène (1) ;
un dispositif d'alimentation en gaz de combustion configuré pour alimenter un gaz de combustion dans la chambre de combustion (2) ;
un dispositif d'alimentation d'air (8) configuré pour alimenter de l'air dans la chambre de combustion (2) ;
un capteur de CO (5) configuré pour détecter le monoxyde de carbone contenu dans un gaz de combustion déchargé par la chambre de combustion (2) ; et
un contrôleur (6),
**caractérisé en ce que**
dans le cas où la température du générateur d'hydrogène (1) est inférieure ou égale à une première température réglée à l'avance, la première température étant inférieure aux températures auxquelles un dépôt de carbone se produit sur un catalyseur dans le générateur d'hydrogène quand la matière première brute gazeuse est alimentée seule au catalyseur, ou dans le cas où une première période réglée à l'avance s'est écoulée après que la combustion par la chambre de combustion (2) est terminée, la première période étant un temps écoulé depuis qu'un fonctionnement de combustion du gaz de combustion dans la chambre de combustion (2) est terminé jusqu'à ce que la température du générateur d'hydrogène (1) soit inférieure ou égale à la première température, le contrôleur (6) étant configuré pour :
commander au dispositif d'alimentation en gaz de combustion d'alimenter la matière brute gazeuse comme gaz de combustion à la chambre de combustion (2) ; et
contrôler si un rapport air-carburant sort d'une plage prédéterminée, le rapport air-carburant étant un rapport entre l'air et le gaz de combustion qui sont alimentés dans la chambre de combustion (2), et
dans le cas où le capteur de CO (5) ne détecte pas une concentration de monoxyde de carbone prédéterminée, le contrôleur (6) est configuré pour :
déterminer que le capteur de CO (5) se trouve dans un état anormal ;
envoyer une notification que le capteur de CO (5) se trouve dans un état anormal ; ou
mettre en oeuvre une commande pour arrêter le fonctionnement de l'appareil de génération d'hydrogène,
dans lequel le contrôleur (6) est configuré pour commander le refroidissement du générateur d'hydrogène (1) de telle sorte que la température du générateur d'hydrogène (1) devienne inférieure ou égale à la première température dans le cas où la température du générateur d'hydrogène (1) est supérieure à la première température et qu'un signal de démarrage pour démarrer l'appareil de génération d'hydrogène a été entré.

2. Appareil de génération d'hydrogène selon la revendication 1, dans lequel le contrôleur (6) est configuré pour commander au dispositif d'alimentation d'air (8) d'alimenter de l'air dans la chambre de combustion (2), de telle sorte que le générateur d'hydrogène (1) soit refroidi et que la température du générateur d'hydrogène (1) devienne inférieure ou égale à la première température.

3. Système de pile à combustible comprenant :
l'appareil de génération d'hydrogène (101) selon la revendication 1 ou 2 ; et
une pile à combustible (3) configurée pour générer de l'énergie électrique en commandant une réaction entre un gaz oxydant et un gaz contenant de l'hydrogène alimenté par l'appareil de génération d'hydrogène.

4. Système de pile à combustible selon la revendication 3, comprenant en outre :
un boîtier (15) dans lequel sont logés l'appareil de génération d'hydrogène (101) et la pile à combustible (3) ; et
un ventilateur (18) configuré pour ventiler l'intérieur du boîtier (15), dans lequel
le contrôleur (6) est configuré pour faire fonctionner le ventilateur (18) afin de refroidir le générateur d'hydrogène (1) de telle sorte que la température du générateur d'hydrogène (1) devienne inférieure ou égale à la première température.

5. Procédé de fonctionnement d'un appareil de génération d'hydrogène, l'appareil de génération d'hydrogène comprenant :
un générateur d'hydrogène (1) configuré pour générer un gaz combustible contenant de l'hydrogène à partir d'une matière brute gazeuse ;
une chambre de combustion (2) configurée pour chauffer le générateur d'hydrogène (1) ;
un dispositif d'alimentation en gaz de combustion configuré pour alimenter un gaz de combustion dans la chambre de combustion (2) ;
un dispositif d'alimentation d'air (8) configuré pour alimenter de l'air dans la chambre de combustion (2) ; et
un capteur de CO (5) configuré pour détecter le monoxyde de carbone contenu dans un gaz de combustion déchargé par la chambre de combustion (2),
**caractérisé en ce que** le procédé comprend :
une étape (a) de détermination du fait qu'une température du générateur d'hydrogène (1) est ou non inférieure ou égale à une première température réglée à l'avance, la première température étant inférieure aux températures auxquelles un dépôt de carbone se produit sur un catalyseur dans le générateur d'hydrogène quand la matière première brute gazeuse est alimentée seule au catalyseur ;
une étape (b) de commande à la chambre de combustion (2) de brûler le gaz de combustion alimenté par le dispositif d'alimentation de gaz de combustion et l'air alimenté par le dispositif d'alimentation d'air (8) après qu'il est déterminé à l'étape (a) que la température du générateur d'hydrogène (1) est inférieure ou égale à la première température réglée à l'avance, ou qu'une première période réglée à l'avance s'est écoulée après que la combustion par la chambre de combustion (2) est terminée ;
une étape (c) de changement d'un rapport air-carburant pour augmenter la concentration de monoxyde de carbone dans la chambre de combustion (2), le rapport air-carburant étant un rapport entre l'air et le gaz de combustion qui sont alimentés dans la chambre de combustion (2) ;
une étape (d) de vérification du fait que le capteur de CO (5) détecte ou non une concentration prédéterminée de monoxyde de carbone après l'étape (c) ;
une étape (1) d'entrée d'un signal de démarrage pour démarrer l'appareil de génération d'hydrogène ; et
une étape (3) de commande du dispositif d'alimentation d'air (8) pour alimenter de l'air dans la chambre de combustion (2) après l'étape (1) de telle sorte que le générateur d'hydrogène (1) soit refroidi et que la température du générateur d'hydrogène (1) devienne inférieure ou égale à la première température s'il est déterminé à l'étape (a) que la température du générateur d'hydrogène (1) est supérieure à la première température réglée à l'avance.

6. Procédé de fonctionnement d'un système de pile à combustible, le système de pile à combustible comprenant :
un appareil de génération d'hydrogène (101) comprenant un générateur d'hydrogène (1) configuré pour générer un gaz combustible contenant de l'hydrogène à partir d'une matière brute gazeuse, une chambre de combustion (2) configurée pour chauffer le générateur d'hydrogène (1), un dispositif d'alimentation en gaz de combustion configuré pour alimenter un gaz de combustion dans la chambre de combustion (2), un dispositif d'alimentation d'air (8) configuré pour alimenter de l'air dans la chambre de combustion (2), et un capteur de CO (5) configuré pour détecter le monoxyde de carbone contenu dans un gaz de combustion déchargé par la chambre de combustion (2) ; et
une pile à combustible (3) configurée pour générer de l'énergie électrique en commandant une réaction entre un gaz oxydant et un gaz contenant de l'hydrogène alimenté par l'appareil de génération d'hydrogène,
le système de pile à combustible comprenant en outre un boîtier, dans lequel sont logés l'appareil de génération d'hydrogène et la pile à combustible, et un ventilateur configuré pour ventiler l'intérieur du boîtier, et
**caractérisé en ce que** le procédé comprend :
une étape (a) de détermination du fait qu'une température du générateur d'hydrogène (1) est ou non inférieure ou égale à une première température réglée à l'avance, la première température étant inférieure aux températures auxquelles un dépôt de carbone se produit sur un catalyseur dans le générateur d'hydrogène quand la matière première brute gazeuse est alimentée seule au catalyseur ;
une étape (b) de commande à la chambre de combustion (2) de brûler le gaz de combustion alimenté par le dispositif d'alimentation de gaz de combustion et l'air alimenté par le dispositif d'alimentation d'air (8) après qu'il est déterminé à l'étape (a) que la température du générateur d'hydrogène (1) est inférieure ou égale à la première température réglée à l'avance, ou qu'une première période réglée à l'avance s'est écoulée après que la combustion par la chambre de combustion (2) est terminée ;
une étape (c) de changement d'un rapport air-carburant pour augmenter la concentration de monoxyde de carbone dans la chambre de combustion (2), le rapport air-carburant étant un rapport entre l'air et le gaz de combustion qui sont alimentés dans la chambre de combustion (2) ;
une étape (d) de vérification du fait que le capteur de CO (5) détecte ou non une concentration prédéterminée de monoxyde de carbone après l'étape (c) ;
une étape (4) d'entrée d'un signal de démarrage pour démarrer le système de pile à combustible ; et
une étape (6) de fonctionnement du ventilateur (18) après l'étape (4) pour refroidir le générateur d'hydrogène (1) de telle sorte que la température du générateur d'hydrogène (1) devienne inférieure ou égale à la première température s'il est déterminé à l'étape (a) que la température du générateur d'hydrogène (1) est supérieure à la première température réglée à l'avance.
